# EUROPEAN PATENT APPLICATION

(11) **EP 2 136 482 A2**
(43) Date of publication of application: **23.12.2009**
(21) Application number: 09162963.4
(22) Date of filing: 17.06.2009
(51) Int. Cl.: H04B 7/185, H04B 7/155

(54) **System for wireless communication between marine vessels and aircraft and corresponding wireless communication system for marine vessels**

(30) Priority: 19.06.2008 TW 97122957
(71) Applicant: Su, Hsin-Chi, Songshan District Taipei City 105 (TW)
(72) Inventor: Su, Hsin-Chi, Songshan District Taipei City 105 (TW)
(74) Representative: Michalski Hüttermann & Partner Patentanwälte

(57) **Abstract**

A system for wireless communication between marine vessels and aircraft comprises a plurality of first offshore wireless network apparatuses provided on different first marine vessels, and an aircraft network apparatus provided on an aircraft. The first offshore wireless network apparatuses are not only wirelessly linked with one another to form a network at sea, but also wirelessly linked with a ground wireless network apparatus, and are oriented toward the sky to transmit and receive wireless signals. The aircraft network apparatus are oriented toward the sea for transmitting wireless signals. Therefore, wireless signal transmission and receiving between Internet access devices provided on the aircraft and the ground wireless network apparatus can be achieved via the aircraft network apparatus and the first offshore wireless network apparatuses, enabling the Internet access devices on the aircraft to link with a ground network system via the ground wireless network apparatus.

## Description

### FIELD OF THE INVENTION

The present invention relates to a wireless communication system, and more particularly to a wireless communication system that enables a flying aircraft to wirelessly link with a ground wireless network apparatus via marine vessels navigating on the sea, so that wireless network service and wireless communication can be provided on the aircraft.

### BACKGROUND OF THE INVENTION

Due to the internalization of economic activities, intercontinental trip by air has become very important and common among people. Since the intercontinental trip by air is a long distance trip and takes a considerably long time, most of the passengers on the airplane would usually wish to access Internet to handle some personal or commercial affairs, send or receive emails, or browse web pages. Currently, the wireless communication on an airplane is achieved via satellites. Some airlines provide passengers with the service of accessing Internet on the airplane via satellite communication. However, the passengers have to pay a considerably high cost for this service while only a limited bandwidth is available for use.

When the airplane flies high over land and is close to some base stations of wireless communication, the airplane can receive and transmit wireless signals from and to the base stations and accordingly allows passengers to access Internet. However, when the airplane is flying high over water, the passengers can only access Internet via satellite communication. This is of course very inconvenient to the passengers.

### SUMMARY OF THE INVENTION

A primary object of the present invention is to provide a wireless communication system that enables an aircraft flying high over water to wirelessly link with a ground wireless network apparatus via marine vessels navigating on the sea, so that passengers can conveniently access Internet on the aircraft.

To achieve the above and other objects, the present invention provides a system for wireless communication between marine vessels and aircraft. The system comprises a plurality of first offshore wireless network apparatuses and an aircraft network apparatus. The first offshore wireless network apparatuses are separately provided on different first marine vessels. Each of the first offshore wireless network apparatuses comprises a sea-to-air communication device and a wireless communication device. The sea-to-air communication device is oriented toward the sky for transmitting and receiving wireless signals. The wireless communication devices on different first marine vessels are wirelessly linked with one another to form a network at sea. The wireless communication device of each of the first offshore wireless network apparatuses is linked with the sea-to-air communication device of the same first offshore wireless network apparatus and also wirelessly linked with at least one ground wireless network apparatus, and then linked with a ground network system via the ground wireless network apparatus. The aircraft network apparatus is provided on an aircraft to link with at least one Internet access device on the aircraft. The aircraft network apparatus is oriented toward the sea to transmit wireless signals. Wireless signal transmission and receiving between the Internet access devices on the aircraft and the first offshore wireless network apparatuses is achieved via the aircraft network apparatus.

According to another embodiment of the present invention, the system for wireless communication between marine vessels and aircraft comprises a plurality of first offshore wireless network apparatuses, a plurality of second offshore wireless network apparatuses, and an aircraft network apparatus. The first offshore wireless network apparatuses are separately provided on different first marine vessels. Each of the first offshore wireless network apparatuses comprises a sea-to-air communication device and a wireless communication device. The sea-to-air communication device is oriented toward the sky for transmitting and receiving wireless signals. The wireless communication devices on different first marine vessels are wirelessly linked with one another to form a network at sea. The wireless communication device of each of the first offshore wireless network apparatuses is linked with the sea-to-air communication device of the same first offshore wireless network apparatus. The second offshore wireless network apparatuses are separately provided on different second marine vessels, and can wirelessly transmit and receive signals to and from the wireless communication devices on the first marine vessels. The second offshore wireless network apparatuses are wirelessly linked with at least one ground wireless network apparatus and then linked with a ground network system via the ground wireless network apparatus. The aircraft network apparatus is provided on an aircraft to link with at least one Internet access device on the aircraft. The aircraft network apparatus is oriented toward the sea to transmit wireless signals. Wireless signal transmission and receiving between the Internet access devices on the aircraft and the first offshore wireless network apparatuses is achieved via the aircraft network apparatus.

To achieve the above and other objects, the present invention further provides a wireless communication system on marine vessels to enable wireless communication between marine vessels and aircraft. The wireless communication system on marine vessels comprises a plurality of first sea-to-air communication devices and a plurality of first wireless communication devices. The first sea-to-air communication devices are separately provided on different first marine vessels and are oriented toward the sky for transmitting and receiving wireless signals. The first wireless communication devices are also separately provided on the first marine vessels. The first wireless communication device on each of the first marine vessels is linked with the first sea-to-air communication device on the same first marine vessel to form a first offshore wireless network apparatus. The first wireless communication devices on different first marine vessels are linked with one another to form a network at sea. At least one of the first wireless communication devices is wirelessly linked with at least one ground wireless network apparatus and then linked with a ground network system via the ground wireless network apparatus.

According to another embodiment of the present invention, the wireless communication system on marine vessels comprises a plurality of first offshore wireless network apparatuses, and at least one second offshore wireless network apparatus. The first offshore wireless network apparatuses are separately provided on different first marine vessels. Each of the first offshore wireless network apparatuses comprises a first sea-to-air communication device being oriented toward the sky for transmitting and receiving wireless signals, and a first wireless communication device being linked with the first sea-to-air communication device to form the first offshore wireless network apparatus. The first wireless communication device is also linked with other first wireless communication devices on other first marine vessels. Each of the second offshore wireless network apparatuses comprises a second wireless communication device. The second wireless communication devices are linked with at least one of the first wireless communication devices to form a network at sea, and at least one of the second wireless communication devices is wirelessly linked with at least one ground wireless network apparatus and then linked with a ground network system via the ground wireless network apparatus.

### BRIEF DESCRIPTION OF THE DRAWINGS

The structure and the technical means adopted by the present invention to achieve the above and other objects can be best understood by referring to the following detailed description of the preferred embodiments and the accompanying drawings, wherein

Fig. 1 is a block diagram of a system for wireless communication between marine vessels and aircraft according to a first embodiment of the present invention;

Fig. 2 is a conceptual view of the system for wireless communication between marine vessels and aircraft according to the first embodiment of the present invention;

Fig. 3 is a block diagram of a system for wireless communication between marine vessels and aircraft according to a second embodiment of the present invention; and

Fig. 4 is a conceptual view of the system for wireless communication between marine vessels and aircraft according to the second embodiment of the present invention.

### DETAILED DESCRIPTION OF THE PREFERRED EMBODIMENTS

The present invention will now be described with some preferred embodiments thereof. For the purpose of easy to understand, elements that are the same in the preferred embodiments are denoted by the same reference numerals.

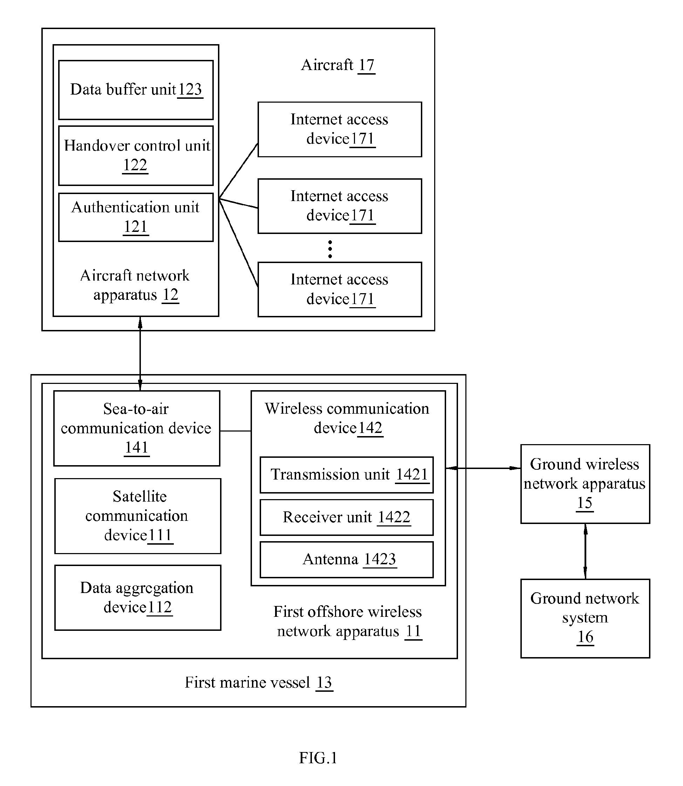

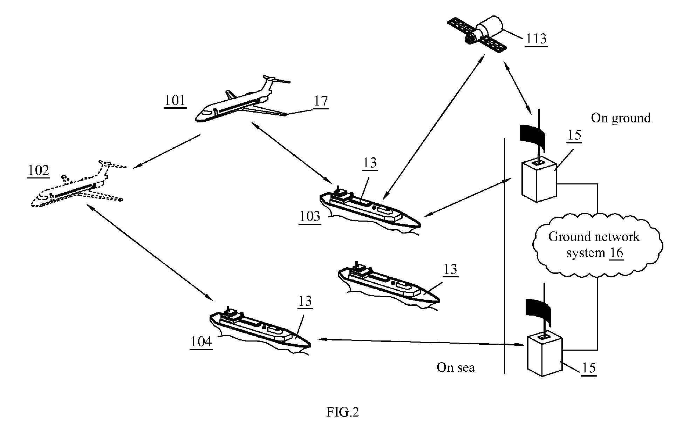

Please refer to Figs. 1 and 2 that are block diagram and conceptual view, respectively, of a system for wireless communication between marine vessels and aircraft according to a first embodiment of the present invention. For the purpose of conciseness and clarity, the present invention is also briefly referred to as "the system" herein. As shown, the system comprises a plurality of first offshore wireless network apparatuses 11 and an aircraft network apparatus 12. The first offshore wireless network apparatuses 11 are separately located on different first marine vessels 13, which can be, for example, a ship, an offshore platform, or an offshore floating structure. Each of the first offshore wireless network apparatuses 11 comprises a sea-to-air communication device 141 and a wireless communication device 142. The sea-to-air communication device 141 is oriented toward the sky for transmitting and receiving wireless signals, and the wireless communication device 142 is linked with the sea-to-air communication device 141. And, the wireless communication devices 142 of the plurality of first offshore wireless network apparatuses 11 are wirelessly linked with one another to form a network at sea. Further, at least one of the wireless communication devices 142 is wirelessly connected to at least one ground wireless network apparatus 15, and then linked with a ground network system 16 via the ground wireless network apparatus 15.

The aircraft network apparatus 12 is provided on an aircraft 17 to link with at least one Internet access device 171 on the aircraft 17. The Internet access device 171 can be, for example, a passenger's notebook computer, a smart mobile phone or a personal digital assistant (PDA), or can be a communication device for transmitting information about the aircraft's various components and parts, such as fuel range, fuel consumption, engine revolution speed, temperature, aircraft coordinates, etc. The aircraft network apparatus 12 is oriented toward the sea for transmitting wireless signals. Wireless signal transmission and receiving between the Internet access devices 171 and the first offshore wireless network apparatuses 11 are achieved via the aircraft network apparatus 12. Therefore, data packets generated by the Internet access devices 171 can be sent to the ground network system 16 via wirelessly linked paths among the aircraft network apparatus 12, the first offshore wireless network apparatuses 11, and the ground wireless network apparatus 15. Meanwhile, the Internet access devices 171 can also receive data packets from the ground network system 16 via the above-mentioned wirelessly linked paths. With these arrangements, even if the aircraft 17 is flying over water, a passenger can still use the Internet access device 171 to browse web pages and receive or transmit emails. Further, compared to the conventional satellite communication, the passengers can use higher bandwidth at lower cost.

The wireless communication device 142 comprises a transmission unit 1421, a receiver unit 1422, and an antenna 1423. The transmission unit 1421 is used to establish an upload channel for transmitting data to any one of the first marine vessels 13 and the ground wireless network apparatus 15. The receiver unit 1422 is used to establish a download channel for receiving data from any one of the first marine vessels 13 and the ground wireless network apparatus 15. The antenna 1423 is used to transmit and receive wireless signals. In implementing the present invention, all the wireless apparatuses, including the aircraft network apparatus 12 and the sea-to-air communication devices 141, also comprise units similar to the above-mentioned transmission unit 1421, receiver unit 1422 and antenna 1423. However, for the purpose of conciseness, these units and antenna are only shown for the wireless communication device 142 in Fig. 1. The transmission units, the receiver units and the antennas have functions that might vary with different requirements for the wireless apparatuses. For instance, the antenna for the wireless communication device 142 is preferably a combination of an omnidirectional antenna and a plurality of directional antennas, in order to receive and transmit wireless signals within a relatively wide signal direction range; and on the other hand, since the aircraft network apparatus 12 only performs receiving and transmitting of wireless signals from and to sea, and the sea-to-air communication devices 141 only perform receiving and transmitting of wireless signals from and to air, only one directional antenna may be sufficient for each of them. Moreover, the antenna power has relation with the signal transmission to be performed with the wireless apparatuses.

The aircraft network apparatus 12 further comprises an authentication unit 121, a handover control unit 122, and a data buffer unit 123. The authentication unit 121 is used to examine the authentication data of the aircraft network apparatus 12, so as to verify whether the aircraft network apparatus 12 is allowed to access the services provided by the first offshore wireless network apparatuses 11. The handover control unit 122 is used to handle handover procedures among the aircraft network apparatus 12 and different first offshore wireless network apparatuses 11. As can be seen in Fig. 2, when the aircraft 17 flies from a first position 101 to a second position 102 to thereby become distant from a first marine vessel 13 located at a third position 103, the wireless signal receiving and transmission quality between the aircraft 17 and the first marine vessel 13 at the third position 103 is lowered. However, the aircraft 17 at the second position 102 is now closer to another first marine vessel 13 at a fourth location 104, the handover control unit 122 therefore executes necessary handover procedures, such as logon procedure, channel allocation procedure, etc., so that the aircraft network apparatus 12 is allowed to receive and transmit wireless signals via the sea-to-air communication device 141 at the fourth location 104, and data packets from the ground network system 16 can be routed to the wireless communication device 142 at the fourth location 104 and then transferred to the aircraft network apparatus 12.

In the event the aircraft 17 flies from the first position 101 to the second position 102 and the wireless signal receiving and transmitting quality between the aircraft 17 and the first marine vessel 13 at the third position 103 is extremely low, but the link between the aircraft network apparatus 12 on the aircraft 17 and the sea-to-air communication device 141 on the first marine vessel 13 at the fourth portion 104 has not been established yet, the data buffer unit 123 can temporarily store the data packets to be sent until the aircraft 17 is linked with the first marine vessel 13 at the fourth location 104. Then, the aircraft network apparatus 12 will transmit the data stored in the data buffer unit 123.

The first offshore wireless network apparatuses 11 can further comprise a data aggregation device 112. In the case the bandwidth between the sea-to-air communication device 141 and the aircraft network apparatus 12 is lower than that between the wireless communication device 142 and the ground wireless network apparatus 15, the data aggregation device 112 can aggregate data received by the wireless communication device 142, such as changes the packet format or compress the data, and then transmits aggregated data streams to the aircraft network apparatus 12. In this manner, it is able to increase the data receiving efficiency of the Internet access devices 171 on the aircraft 17.

Since the first offshore wireless network apparatuses 11 are set up on the mobile first marine vessels 13, it is possible the first offshore wireless network apparatuses 11 are moved to positions at where the wireless communication devices 142 thereof are not able to link with the ground wireless network apparatus 15. Therefore, each of the first offshore wireless network apparatuses 11 can further comprise a satellite communication device 111, so as to receive and transmit wireless signals from and to the ground wireless network apparatus 15 by satellite communication via a satellite 113.

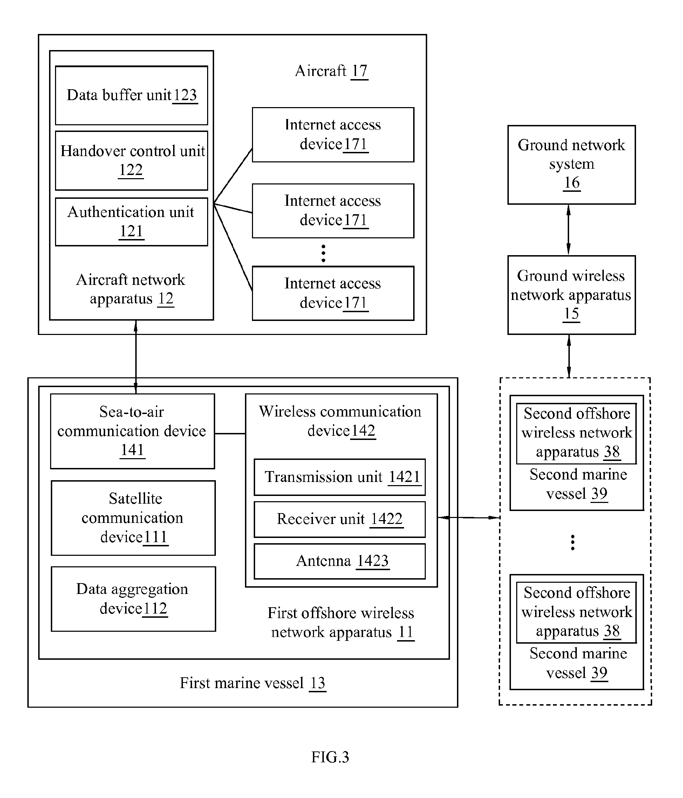

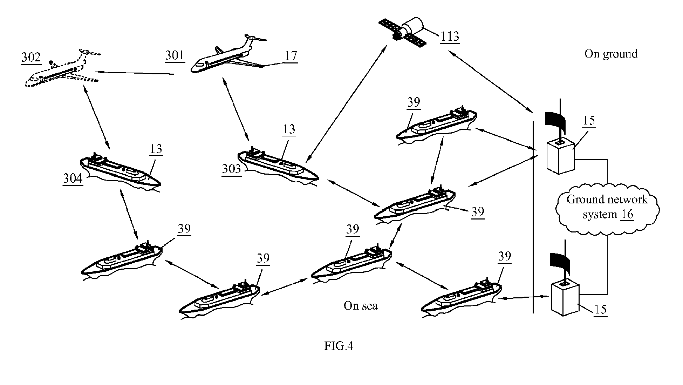

Please refer to Figs. 3 and 4 that are block diagram and conceptual view, respectively, of a system for wireless communication between marine vessels and aircraft according to a second embodiment of the present invention. As shown, the system in the second embodiment comprises a plurality of first offshore wireless network apparatuses 11, a plurality of second offshore wireless network apparatuses 38, and an aircraft network apparatus 12. The first offshore wireless network apparatuses 11 are separately located on different first marine vessels 13, and the second offshore wireless network apparatuses 38 are separately located on different second marine vessels 39. The aircraft network apparatus 12 is provided on an aircraft 17.

Each of the first offshore wireless network apparatuses 11 comprises a sea-to-air communication device 141 and a wireless communication device 142. In the second embodiment, since the action relation between the sea-to-air communication device 141 and the aircraft network apparatus 12 is the same as that in the first embodiment, it is therefore not repeated herein. Each of the second offshore wireless network apparatuses 38 comprises a wireless communication device and other related units the same as those having been described above for the wireless communication device 142 of the first offshore wireless network apparatus 11. Via the wireless communication device thereof, each of the second offshore wireless network apparatuses 38 can be wirelessly linked with other second offshore wireless network apparatuses 38, the first offshore wireless network apparatuses 11 and the ground wireless network apparatus 15. The second offshore wireless network apparatuses 38 do not comprise the sea-to-air communication device 141, and this makes them different from the first offshore wireless network apparatuses 11.

The system according to the second embodiment is different from the system of the first embodiment in that it comprises a plurality of second offshore wireless network apparatuses 38, and the wireless communication devices 142 of the first offshore wireless network apparatuses 11 are not directly linked with the ground wireless network apparatuses 15. Instead, the wireless communication devices 142 of the first offshore wireless network apparatuses 11 are wirelessly linked with at least one of the ground wireless network apparatuses 15 via at least one second wireless communication device provided on the second offshore wireless network apparatuses 38, and then linked with the ground network system 16 via the ground wireless network apparatus 15, so as to form a network at sea. Therefore, even if the aircraft 17 flies to a position high over water and far away from the land, data packets generated by the Internet access devices 171 on the aircraft 17 can still be sent to the ground network system 16 via the electrically linked paths between the ground wireless network apparatuses 15 and the network at sea formed among the aircraft network apparatus 12, the first offshore wireless network apparatuses 11 and the second offshore wireless network apparatuses 38. Meanwhile, the Internet access devices 171 can also receive data packets from the ground network system 16 via the above-mentioned paths. Passengers on the aircraft 17 can also use the Internet access devices 171 to browse web pages and receive or transmit emails. Further, compared to the conventional satellite communication, the passengers can use higher bandwidth at lower cost.

Since the first and the second offshore wireless network apparatuses 11, 38 are set up on the mobile first and second marine vessels 13, 39, respectively, it is possible these offshore wireless network apparatuses 11, 38 are subject to continuous rolling and pitching caused by surges and the antennas thereof would have biased signal receiving ranges. When the antennas on two offshore wireless network apparatuses fail to stably locate within each other's signal receiving ranges, connection and disconnection between the two offshore wireless network apparatuses will occur frequently. Therefore, the network at sea formed by the plurality of offshore wireless network apparatuses is preferably set up as a wireless mesh network (WiMesh), which is a mesh network supporting multipoint-to-multipoint communication and adopting Mobile Ad Hoc Routing Protocol, so that every offshore wireless network apparatus is both a server and a router. In this manner, it is able to overcome the problem in the server/client network that all other offshore wireless network apparatuses at the client would be unable to link with one another when an offshore wireless network apparatus acting as a server is moved to a non-connectable position. And, wireless data transmission among the plurality of offshore wireless network apparatuses is performed according to a predetermined wireless communication protocol, such as WiFi Protocol, WiMAX Protocol, VHF Protocol or UHF Protocol, which uses a transmission bandwidth larger than that being used in satellite communication and requires lower cost compared to satellite communication.

As can be seen in Fig. 4, when the aircraft 17 flies from a first position 301 to a second position 302 to thereby become distant from a first marine vessel 13 located at a third position 303, the wireless signal receiving and transmission quality between the aircraft 17 and the first marine vessel 13 at the third position 303 is lowered. However, the aircraft 17 at the second position 302 is now closer to another first marine vessel 13 at a fourth location 304, the handover control unit 122 therefore executes necessary handover procedures, such as logon procedure, channel allocation procedure, etc., so that the aircraft network apparatus 12 is allowed to receive and transmit wireless signals via the sea-to-air communication device 141 at the fourth location 304, and data packets from the ground network system 16 can be routed to the wireless communication device 142 at the fourth location 304 and then transferred to the aircraft network apparatus 12.

The present invention has been described with some preferred embodiments thereof and it is understood that many changes and modifications in the described embodiments can be carried out without departing from the scope and the spirit of the invention that is intended to be limited only by the appended claims.

## Claims

1. A system for wireless communication between marine vessels and aircraft, comprising:
a plurality of first offshore wireless network apparatuses (11) being separately provided on different first marine vessels (13), each of the first offshore wireless network apparatuses (11) comprising a sea-to-air communication device (141) and a wireless communication device (142); the sea-to-air communication device (141) being oriented toward the sky for transmitting and receiving wireless signals; the wireless communication device (142) being linked with the sea-to-air communication device (141) and wirelessly linked with at least one ground wireless network apparatus (15), and then linked with a ground network system (16) via the ground wireless network apparatus (15); and
an aircraft network apparatus (12) being provided on an aircraft (17) to link with at least one Internet access device (171) on the aircraft (17); the aircraft network apparatus (12) being oriented toward the sea for transmitting wireless signals, and wireless signal transmission and receiving between the Internet access devices (171) and the first offshore wireless network apparatuses (11) being achieved via the aircraft network apparatus (12).

2. The system for wireless communication between marine vessels and aircraft as claimed in claim 1, wherein the aircraft network apparatus (12) further comprises an authentication unit (121) for examining authentication data of the aircraft network apparatus (12), so as to verify whether the aircraft network apparatus (12) is allowed for accessing services provided by the first offshore wireless network apparatuses (11).

3. The system for wireless communication between marine vessels and aircraft as claimed in claim 1, wherein the wireless communication device (142) further comprises a transmission unit (1421), a receiver unit (1422) and an antenna (1423); the transmission unit (1421) being used to establish an upload channel for transmitting data to the ground wireless network apparatus (15); the receiver unit (1422) being used to establish a download channel for receiving data from the ground wireless network apparatus (15); and the antenna (1423) being used to transmit and receive wireless signals.

4. The system for wireless communication between marine vessels and aircraft as claimed in claim 1, wherein the sea-to-air communication device (141) further comprises a transmission unit (1421), a receiver unit (1422) and an antenna (1423); the transmission unit (1421) being used to establish an upload channel for transmitting data to the aircraft network apparatus (12); the receiver unit (1422) being used to establish a download channel for receiving data from the aircraft network apparatus (12); and the antenna (1423) being used to transmit and receive wireless signals.

5. The system for wireless communication between marine vessels and aircraft as claimed in claim 1, wherein each of the first offshore wireless network apparatuses (11) further comprises a satellite communication device (111).

6. The system for wireless communication between marine vessels and aircraft as claimed in claim 1, wherein each of the first offshore wireless network apparatuses (11) further comprises a data aggregation device (112) for aggregating data received by the wireless communication device (142) and then transmitting aggregated data streams to the aircraft network apparatus (12).

7. The system for wireless communication between marine vessels and aircraft as claimed in claim 1, wherein the aircraft network apparatus (12) further comprises a handover control unit (122) for handling handover procedures among the aircraft network apparatus (12) and different first offshore wireless network apparatuses (11).

8. The system for wireless communication between marine vessels and aircraft as claimed in claim 1, wherein the aircraft network apparatus (12) further comprises a data buffer unit (123) for temporarily storing data to be transmitted when the aircraft network apparatus (12) finds none of the first offshore wireless network apparatuses (11) is able to receive wireless signals from the aircraft (17); and wherein when the aircraft network apparatus (12) checks again and finds one of the first offshore wireless network apparatuses (11) is able to receive the wireless signals from the aircraft (17), the data temporarily stored in the data buffer unit (123) is transmitted to that first offshore wireless network apparatus (11).

9. A system for wireless communication between marine vessels and aircraft, comprising:
a plurality of first offshore wireless network apparatuses (11) being separately provided on different first marine vessels (13), each of the first offshore wireless network apparatuses (11) comprises a sea-to-air communication device (141) and a wireless communication device (142); the sea-to-air communication device (141) being oriented toward the sky for transmitting and receiving wireless signals; and the wireless communication device (142) being linked with the sea-to-air communication device (141);
a plurality of second offshore wireless network apparatuses (38) being separately provided on different second marine vessels (39) for receiving and transmitting wireless signals from and to the wireless communication devices (142) of the first offshore wireless network apparatuses (11), and each of the second offshore wireless network apparatuses (38) being wirelessly linked with at least one ground wireless network apparatus (15) and then linked with a ground network system (16) via the ground wireless network apparatus (15); and
an aircraft network apparatus (12) being provided on an aircraft (17) to link with at least one Internet access device (171) on the aircraft (17); the aircraft network apparatus (12) being oriented toward the sea for transmitting wireless signals, and wireless signal transmission and receiving between the Internet access devices (171) and the first offshore wireless network apparatuses (11) being achieved via the aircraft network apparatus (12).

10. The system for wireless communication between marine vessels and aircraft as claimed in claim 9, wherein the aircraft network apparatus (12) comprises an authentication unit (121) for examining authentication data of the aircraft network apparatus (12), so as to verify whether the aircraft network apparatus (12) is allowed for accessing services provided by the first offshore wireless network apparatuses (11).

11. The system for wireless communication between marine vessels and aircraft as claimed in claim 9, wherein the wireless communication device (142) further comprises a transmission unit (1421), a receiver unit (1422) and an antenna (1423); the transmission unit (1421) being used to establish an upload channel for transmitting data to the second offshore wireless network apparatuses (38); the receiver unit (1422) being used to establish a download channel for receiving data from the second offshore wireless network apparatuses (38); and the antenna (1423) being used to transmit and receive wireless signals.

12. The system for wireless communication between marine vessels and aircraft as claimed in claim 9, wherein the sea-to-air communication device (141) further comprises a transmission unit (1421), a receiver unit (1422) and an antenna (1423); the transmission unit (1421) being used to establish an upload channel for transmitting data to the aircraft network apparatus (12); the receiver unit (1422) being used to establish a download channel for receiving data from the aircraft network apparatus (12); and the antenna (1423) being used to transmit and receive wireless signals.

13. The system for wireless communication between marine vessels and aircraft as claimed in claim 9, wherein each of the first offshore wireless network apparatuses (11) further comprises a satellite communication device (111).

14. The system for wireless communication between marine vessels and aircraft as claimed in claim 9, wherein each of the first offshore wireless network apparatuses (11) further comprises a data aggregation device (112) for aggregating data received by the wireless communication device (142) and then transmitting aggregated data streams to the aircraft network apparatus (12).

15. The system for wireless communication between marine vessels and aircraft as claimed in claim 9, wherein the aircraft network apparatus (12) comprises a handover control unit (122) for handling handover procedures among the aircraft network apparatus (12) and different first offshore wireless network apparatuses (11).

16. The system for wireless communication between marine vessels and aircraft as claimed in claim 9, wherein the aircraft network apparatus (12) comprises a data buffer unit (123) for temporarily storing data to be transmitted when the aircraft network apparatus (12) finds none of the first offshore wireless network apparatuses (11) is able to receive wireless signals from the aircraft (17); and wherein when the aircraft network apparatus (12) checks again and finds one of the first offshore wireless network apparatuses (11) is able to receiving the wireless signals from the aircraft (17), the data temporarily stored in the data buffer unit (123) is transmitted to that first offshore wireless network apparatus (11).

17. A wireless communication system on marine vessels for wireless communication between marine vessels and aircraft, comprising:
a plurality of first sea-to-air communication device (141)s being separately provided on different first marine vessels (13); each of the first sea-to-air communication device (141)s being oriented toward the sky for transmitting and receiving wireless signals; and
a plurality of first wireless communication devices (142) being separately provided on the first marine vessels (13); the first wireless communication device (142) on each of the first marine vessels (13) being linked with the first sea-to-air communication device (141) on the same first marine vessel (13) to form a first offshore wireless network apparatus (11), and the first wireless communication devices (142) on different first marine vessels (13) being linked with one another to form a network at sea; and at least one of the first wireless communication devices (142) being wirelessly linked with at least one ground wireless network apparatus (15) and then linked with a ground network system (16) via the ground wireless network apparatus (15).

18. The wireless communication system on marine vessels for wireless communication between marine vessels and aircraft as claimed in claim 17, wherein the first offshore wireless network apparatus (11) further comprises a data aggregation device (112) for aggregating data received by the first wireless communication device (142) and then transmitting aggregated data streams to the sky as wireless signals.

19. A wireless communication system on marine vessels for wireless communication between marine vessels and aircraft, comprising:
a plurality of first offshore wireless network apparatuses (11); and
at least one second offshore wireless network apparatus (38);
wherein the first offshore wireless network apparatuses (11) are separately provided on different first marine vessels (13), and each of the first offshore wireless network apparatuses (11) comprises:
a first sea-to-air communication device (141) being oriented toward the sky for transmitting and receiving wireless signals; and
a first wireless communication device (142) being linked with the first sea-to-air communication device (141) to form the first offshore wireless network apparatus (11); and
the first wireless communication devices (142) on different first marine vessels (13) being linked with one another; and
wherein each of the second offshore wireless network apparatuses (38) comprises a second wireless communication device (142), the second wireless communication devices (142) are linked with at least one of the first wireless communication devices (142) to form a network at sea, and at least one of the second offshore wireless network apparatuses (38) is wirelessly linked with at least one ground wireless network apparatus (15) and then linked with a ground network system (16) via the ground wireless network apparatus (15).

20. The wireless communication system on marine vessels for wireless communication between marine vessels and aircraft as claimed in claim 19, wherein each of the first offshore wireless network apparatuses (11) further comprises a data aggregation device (112) for aggregating data received by the first wireless communication device (142) and then transmitting aggregated data streams to the sky as wireless signals.
